# EUROPÄISCHE PATENTSCHRIFT

(11) **EP 2 261 490 B1**
(45) Veröffentlichungstag und Bekanntmachung des Hinweises auf die Patenterteilung: **26.02.2014**
(21) Anmeldenummer: 09161170.7
(22) Anmeldetag: 26.05.2009
(51) Int. Cl.: F02D 41/14, F02D 19/02, F02D 41/00

(54) **Verfahren und Gerät zum Ansteuern einer Kraftstoffeinspritzvorrichtung eines Verbrennungsmotors**
Method and device for controlling a fuel injection device of a combustion engine
Procédé et appareil de commande d'un dispositif d'injection de carburant d'un moteur à combustion interne

(43) Veröffentlichungstag der Anmeldung: 15.12.2010
(73) Patentinhaber: Fogen, René, 4780 Sankt Vith (BE); Strozyk, Kai, 4780 Sankt Vith (BE); Schumacher, Christian, 4784 Sankt Vith (BE)
(72) Erfinder: Fogen, René, 4780 Sankt Vith (BE); Strozyk, Kai, 4780 Sankt Vith (BE); Schumacher, Christian, 4784 Sankt Vith (BE)
(74) Vertreter: Office Freylinger

(56) Entgegenhaltungen:
- DE-A1- 4 117 440
- DE-A1-102007 020 960
- US-A1- 2007 129 878

## Beschreibung

### Technisches Gebiet

Die vorliegende Erfindung betrifft allgemein auf ein Verfahren, beziehungsweise ein Gerät, zum Ansteuern einer Kraftstoffeinspritzvorrichtung eines Verbrennungsmotors. Vorteilhafterweise betrifft die Erfindung ein derartiges Verfahren, bzw. Gerät, mittels welchem über die durchgeführte Ansteuerung Kraftstoffeinspritzvorrichtung der Betrieb des Verbrennungsmotors an den Ethanolgehalt des verwendeten Kraftstoffs angepasst werden kann.

### Stand der Technik

Seit nunmehr einigen Jahren wird sich in der Automobilindustrie vermehrt über Alternativen zu rein auf Erdölbasis hergestellten Kraftstoffen Gedanken gemacht. Eine Möglichkeit liegt in der Beimischung von Ethanol zu Kraftstoff auf Erdölbasis, wie sie insbesondere in lateinamerikanischen Ländern praktiziert wird. Allerdings möchte man auch sicherstellen, dass ein fehlerfreier Betrieb des Fahrzeugs auch gewährleistet ist, wenn die Konzentration des Ethanols im Kraftstoff von Tankfüllung zu Tankfüllung variiert. Man fasst dabei die gesamte Bandbreite von 0 bis 100 % Alkohol im Kraftstoff (sogenannter "FIexFueI") ins Auge. Da der Energieinhalt von Ethanol gegenüber von, beispielsweise, handelüblichem Normalbenzin abweicht, ist es für einen einwandfreien Betrieb des Verbrennungsmotors unabdinglich, dass die Betriebsarameter der Motorsteuerung auf veränderliche Kraftstoffzusammensetzungen anpassbar sind. Allerdings möchte man nicht dem Endverbraucher zumuten, nach jeder Tankfüllung die Anpassung der Parameter manuell vorzunehmen. Benötigt wird daher eine sich selbsttätig an den Kraftstoff anpassende Motorregelung, welche keine spezielle Intervention des Kraftfahrers voraussetzt.

Ein bekanntes Verfahren zur Nutzung von Kraftstoffen mit Alkoholzusatz in einem Verbrennungsmotor ist beispielsweise aus der DE 40 31 009 A1 oder DE 10 2007 020 960 A1 bekannt. In diesem Verfahren wird eine Brennstoffprobe durch Aufheizen verdampft, die nach der Verdampfung entstandene Druck-, Volumen- und/oder Temperaturänderung werden festgestellt, und die festgestellten Änderungen werden benutzt um die Kraftstoffzusammensetzung zu ermitteln. Die Motorsteuerungsgrößen werden schließlich an die Kraftstoffzusammensetzung angepasst. Dieses Verfahren weist den Nachteil auf, dass es umständlich zu realisieren ist und insbesondere die Verwendung eine Vorrichtung zum Verdampfen von Brennstoffproben voraussetzt.

Ein weiteres Verfahren zum Bestimmen der Alkoholkonzentration des Kraftstoffs findet sich in der DE 10 2006 029 970 A1. In diesem Verfahren wird die unbekannte Kraftstoffzusammensetzung aus der Abweichung des gemessenen Lambdawerts von einem theoretischen Lambdawert einer bekannten Kraftstoffzusammensetzung hergeleitet. Allerdings beschreibt die DE 10 2006 029 970 A1 nicht, wie die hergeleitete Kraftstoffzusammensetzung benutzt wird, um die Steuerung des Motors an den getankten Kraftstoff anzupassen.

### Aufgabe der Erfindung

Der Erfindung liegt als Aufgabe zugrunde, ein Verfahren bzw. ein Gerät, zum Ansteuern einer Kraftstoffeinspritzvorrichtung eines Verbrennungsmotors so auszugestalten, dass eine automatische Anpassung an veränderliche Kraftstoffzusammensetzungen mit relativ einfachen Mitteln (beispielsweise ohne Veränderung der herstellerseitig in der Motorsteuerungseinheit abgelegten Kennfeldern) erreicht werden kann. Diese Aufgabe wird durch ein Verfahren nach Anspruch 1, bzw. durch ein Einspritzungssteuergerät nach Anspruch 11 gelöst.

### Allgemeine Beschreibung der Erfindung

Das erfindungsgemäße Verfahren zum Ansteuern einer Kraftstoffeinspritzvorrichtung eines Verbrennungsmotors (bspw. eines Automobils) umfasst die folgenden Schritte:
o Einlesen in ein (nachrüstbares) Einspritzungssteuergerät, über eine Schnittstelle, eines durch eine Motorsteuerungseinheit ermittelten Parametersatzes enthaltend zumindest einen Kurzzeit-Lambdaadaptionswert (short term fuel trim) und einen Langzeit-Lambdaadaptionswert (long term fuel trim);
o Abgreifen eines ersten, durch die Motorsteuerungseinheit ausgegebenen, Einspritzungssteuersignals durch das Einspritzungssteuergerät;
o Ermitteln einer Einspritzsignalkorrektur durch das Einspritzungssteuergerät aufgrund zumindest des Kurzzeit-Lambdaadaptionswerts und des Langzeit-Lambdaadaptionswerts; sowie
o Ausgeben eines zweiten, durch das Einspritzungssteuergerät aufgrund des ersten Einspritzungssteuersignals und der Einspritzsignalkorrektur erzeugten, Einspritzungssteuersignals an die Kraftstoffeinspritzvorrichtung.
Dabei wird die Einspritzsignalkorrektur dahingehend ermittelt, dass das Einspritzungssteuergerät durch die Ausgabe des zweiten Einspritzungssteuersignals an die Kraftstoffeinspritzvorrichtung den Langzeit-Lambdaadaptionswert auf einen im Einspritzungssteuergerät vorgegebenen Sollwert regelt. Das Verfahren beruht unter anderem auf dem Einsatz eines gesonderten Einspritzungssteuergeräts, welches an die Motorsteuerungseinheit angeschlossen wird. Dadurch wird vermieden, dass die vorzunehmenden Korrekturen am Einspritzsignal in der Motorsteuerungseinheit einprogrammiert werden müssen, was in der Praxis aufgrund der Vielzahl sich gegenseitig beeinflussender Parameter zu unerwünschten Nebeneffekten führen könnte. Dem Verfahren kommt zugute, dass eine sogenannte On-Board-Diagnose (OBD) seit einigen Jahren (in Europa spätestens seit Einführung der Euro-4-Abgasnorm in 2005, welche eine OBD vorschreibt) zur Standardausrüstung in jedem neu zugelassenen Fahrzeug gehört. Der Sollwert, auf den der Langzeit-Lambdaadaptionswert geregelt wird kann einmalig, etwa beim Einbau des Einspritzungssteuergerät, in diesem festgelegt werden. Als Sollwert kann zum Beispiel der zum Zeitpunkt des Einbaus gültige Langzeit-Lambdaadaptionswert gespeichert werden. Der Sollwert kann aber auch in Abhängigkeit von Motorparametern während des Ablaufs des Verfahrens angepasst werden.

Als Lambdawert wird bekanntlich das Verhältnis von Luft- zu Kraftstoffmasse im Vergleich zu einem stöchiometrischen Gemisch bezeichnet. Ein Lambdawert (kurz: λ ) von 1 bedeutet folglich, dass genau diejenige Luftmenge vorhanden ist, um die vollständige Verbrennung des Kraftstoffs zu gewährleisten. Im Fall von Benzin entspricht ein Lambdawert von 1 einem Massenverhältnis Luft/Kraftstoff von 14,7/1. Im Fall λ>1 liegt ein mageres Gemisch vor, im Fall λ<1 ein fettes. In Sinne eines verbrauchsoptimierten Betriebs des Verbrennungsmotors ist die Motorsteuerung prinzipiell so programmiert, den Lambdawert in gewissen Betriebssituationen, etwa bei Teillast oder im Leerlauf, in einem Fenster um den Wert 1 zu halten (etwa von 0,97-1,03). Dies geschieht über die sogenannte Lambdaregelung, ein Regelkreis, in welchem die Motorsteuerungseinheit über die im Einspritzsignal kodierte Einspritzdauer die Menge des eingespritzten Kraftstoffs so justiert, dass der von der Lambdasonde erfasste Lambdawert innerhalb des Lambdafensters um den Wert 1 pendelt. Langzeitdrifts, bedingt etwa durch Alterung von Komponenten, werden dabei über einen Langzeit-Offset, die sogenannte Langzeit-Lambdaadaption kompensiert. Dadurch schwanken die von der Motorsteuerung errechneten Kurzzeit-Korrekturwerte (Kurzzeit-Lambdaadaptation) längerfristig um den Nullpunkt. Die Kurzzeit-Lambdaadaptation und die Langzeit-Lambdaadaption werden von der OBD in digitaler Form zur Verfügung gestellt. Der Kurzzeit-Lambdaadaptationswert entspricht einer prozentualen Korrektur der Einspritzmenge, um den Lambdawert zum gewünschten, aus dem Einspritzkennfeld abgeleiteten, Wert zu regeln (welcher im Normalfall 1 ist, jedoch je nach Betriebszustand auch davon abweichen kann). Der Langzeit-Lambdaadaptionswert entspricht dem oben beschriebenen Langzeit-Offset.

Betreibt man beispielsweise einen auf normalen Ottokraftstoff ausgerichteten Motor mit E85-Kraftstoff, versucht die Motorsteuerung, die Einspritzmengen zu erhöhen, um zu vermeiden, dass der Motor dauerhaft zu mager läuft. Kurzfristig geschieht dies über den Kurzzeit-Lambdaadaptationswert. Nach einiger Zeit wird die Langzeitkomponente der Korrektur zu einer Veränderung des Langzeit-Lambdaadaptionswert führen, welcher schließlich an eine Grenze des Regelbereichs stößt und eine Fehlermeldung auslöst. Dank der vorliegenden Erfindung kann der Langzeit-Lambdaadaptionswert auch bei verändertem Kraftstoff in der Nähe eines Sollwerts gehalten werden, den der Langzeit-Lambdaadaptionswert unter Normalbedingungen, sprich bei Betreiben des Motors mit dem ursprünglich vorgesehenen Kraftstoff, annehmen würde.

Vorzugsweise umfasst das Ermitteln der Einspritzsignalkorrektur die Berechnung eines Langzeitkorrekturwerts und eines Kurzzeitkorrekturwerts, welche beide zur Erzeugung des zweiten Einspritzungssteuersignals herangezogen werden. Allerdings ist zu bemerken, dass die im erfindungsgemäßen Verfahren realisierte Regelung vorzugsweise viel langsamer vonstatten geht als die in der Motorsteuerungseinheit. Bei der Kurzzeitkorrektur handelt es sich somit nicht um ein Ersetzen der Regelung, die die Motorsteuerungseinheit durchführt, sondern um eine zusätzliche Regelung, die vorzugsweise eine Zeitkonstante im Sekundenbereich (etwa von 0,1 bis 10 s) aufweist. Die Zeitkonstante der Langzeitkorrektur ist vorzugsweise im Bereich 5 bis 50 s gewählt. Die berechneten Lang- und Kurzzeitkorrekturwerte können durch das Einspritzungssteuergerät abgespeichtert werden. Bei einer erneuten Berechnung der Lang- und Kurzzeitkorrekturwerte können dann die abgespeichterten Lang- und Kurzzeitkorrekturwerte herangezogen werden.

Die Einspritzsignalkorrektur im zweiten Einspritzungssteuersignal bewirkt vorzugsweise, bezogen auf das erste Einspritzungssteuersignal, eine Veränderung (Verlängerung oder Verkürzung) der Kraftstoffeinspritzdauer, d.h. das Einspritzungssteuergerät gibt der Kraftstoffeinspritzvorrichtung eine andere Kraftstoffeinspritzdauer vor, als ursprünglich von der Motorsteuerungseinheit vorgesehen. Die Einspritzsignalkorrektur im zweiten Einspritzungssteuersignal kann, bezogen auf das erste Einspritzungssteuersignal, eine zeitliche Verschiebung des Beginns und/oder des Endes der Kraftstoffeinspritzungen bewirken.

Vorzugsweise gibt die Motorsteuerungseinheit das erste Einspritzungssteuersignal während eines Betriebs des Einspritzungssteuergerät ständig an eine die Einspritzvorrichtung simulierende elektrische Ersatzlast (bspw. Widerstände und/oder Induktoren) aus (ist also nicht direkt mit der Kraftstoffeinspritzvorrichtung verbunden). Dabei greift das Einspritzungssteuergerät das Einspritzungssteuersignal bevorzugt an dieser Ersatzlast ab. Die Ersatzlast bewirkt, dass die Motorsteuerungseinheit nach Einbau des Einspritzungssteuergeräts keine Fehlermeldung aufgrund einer nicht oder inkorrekt angeschlossenen Kraftstoffeinspritzvorrichtung ausgibt. Das Einspritzungssteuergerät wird demnach vorzugsweise derart zwischen der Motorsteuerungseinheit und der Einspritzungsvorrichtung angeschlossen, dass die Abweichung des tatsächlich an die Einspritzungsvorrichtung ausgegebenen Signals vom ursprünglichen Einspritzungssteuersignal durch die Motorsteuerungseinheit nicht festgestellt werden können.

Außer den Lambdaadaptionswerten kann der ins Einspritzungssteuergerät eingelesene Parametersatz weiter einen oder mehrere der folgenden Parameter umfassen:
o Kalkulierte Motorlast,
o Erkannte Luftmasse,
o Drosselklappenposition,
o Saugrohrdruck,
o Fahrpedalposition,
o Motortemperatur,
o Ansauglufttemperatur,
o Drehzahl,
o Etc.

Der im Einspritzungssteuergerät vorgegebene Sollwert kann in Abhängigkeit eines oder mehrerer dieser Parameter bestimmt werden. Das Einspritzungssteuergerät kann auch die Einspritzsignalkorrektur unter Berücksichtigung dieser Parameter ermitteln.

In einer bevorzugten Ausgestaltung der Erfindung kann das Einspritzungssteuergerät aus dem ersten Einspritzungssteuersignal auch die Drehzahl des Verbrennungsmotors ermitteln. Dabei kann die Frequenz der (Haupt-) Einspritzungen oder die Zeit zwischen zwei aufeinanderfolgenden (Haupt-) Einspritzungsbeginnen als Kennzahl (Maß) für die Drehzahl genutzt werden (da zwischen all diesen Größen ein bekannter direkter Zusammenhang besteht). Der im Einspritzungssteuergerät vorgegebene Sollwert und/oder die Einspritzsignalkorrektur kann in Abhängigkeit der ermittelten Drehzahl bestimmt werden. Die Kenntnis der Drehzahl ist insbesondere von Nutzen, damit das Einspritzungssteuergerät über die Einspritzsignalkorrektur eine zeitliche Verschiebung des Beginns und/oder des Endes der Kraftstoffeinspritzungen bewirken kann. Falls beispielsweise der Beginn der korrigierten Einspritzungen bezogen auf die von der Motorsteuerungseinheit geplanten Einspritzungen zeitlich nach vorne verschoben werden soll, kann das Einspritzungssteuergerät im zweiten Einspritzungssteuersignal die Zeit zwischen zwei aufeinanderfolgenden Einspritzungsbeginnen reduzieren. Da das Berechnen der Drehzahl aus dem ersten Einspritzungssteuersignal im Fall von Mehrfacheinspritzungen (etwa Doppeleinspritzungen beim Starten des Motors) zu einem fehlerhaften Ergebnis führen kann, kann alternativ oder zusätzlich die von der OBD-Einheit ausgegebene Drehzahl zum Ermitteln der Einspritzsignalkorrektur benutzt werden.

Ein weiterer Aspekt der Erfindung betrifft, wie oben erwähnt, ein (nachrüstbares) Einspritzungssteuergerät zum Ansteuern einer Kraftstoffeinspritzvorrichtung eines Verbrennungsmotors. An einem solchen Einspritzungssteuergerät sind insbesondere vorgesehen:
o eine Schnittstelle zum Einlesen in das Einspritzungssteuergerät eines durch eine Motorsteuerungseinheit ermittelten Parametersatzes enthaltend zumindest einen Kurzzeit-Lambdaadaptionswert und einen Langzeit-Lambdaadaptionswert; und
o eine Prozessoreinheit mit einem Eingangsport zum Abgreifen eines ersten, durch die Motorsteuerungseinheit ausgegebenen, Einspritzungssteuersignals sowie einem Ausgangsport zur Ausgabe eines zweiten Einspritzungssteuersignals an die Kraftstoffeinspritzvorrichtung.
Die Prozessoreinheit ist dabei so konfiguriert, dass sie aufgrund zumindest des Kurzzeit-Lambdaadaptionswerts und des Langzeit-Lambdaadaptionswerts eine Einspritzsignalkorrektur ermittelt sowie aufgrund des ersten Einspritzungssteuersignals und der ermittelten Einspritzsignalkorrektur das zweite Einspritzungssteuersignal erzeugt, mittels dessen Ausgabe an die Kraftstoffeinspritzvorrichtung der Langzeit-Lambdaadaptionswert auf einen im Einspritzungssteuergerät vorliegenden Sollwert geregelt wird.

Vorzugsweise sind die Schnittstelle sowie die Prozessoreinheit dazu eingerichtet, drahtlos miteinander zu kommunizieren (etwa über Bluetooth oder ein anderes Funkübertragungsprotokoll).

Das Einspritzungssteuergerät umfasst vorzugsweise zumindest eine die Einspritzvorrichtung simulierende elektrische Ersatzlast, welche an einen das erste Einspritzungssteuersignal ausgebenden Ausgangsport der Motorsteuerungseinheit anschließbar ist.

Die Konfiguration der Prozessoreinheit erfolgt vorzugsweise mittels eines Computerprogrammprodukts, umfassend mittels eines Speicher- und/oder Transportmediums als Computercode dargestellte Instruktionen, welche die Prozessoreinheit veranlasst, aufgrund zumindest des Kurzzeit-Lambdaadaptionswerts und des Langzeit-Lambdaadaptionswerts eine Einspritzsignalkorrektur zu ermitteln sowie aufgrund des ersten Einspritzungssteuersignals und der ermittelten Einspritzsignalkorrektur das zweite Einspritzungssteuersignal zu erzeugen, mittels dessen Ausgabe an die Kraftstoffeinspritzvorrichtung der Langzeit-Lambdaadaptionswert auf einen im Einspritzungssteuergerät vorliegenden Sollwert geregelt wird.

### Kurze Beschreibung der Figuren

Im Folgenden werden nun Beispiele zu möglichen Ausgestaltungen der Erfindung anhand der beiliegenden Figuren näher erläutert. Diese zeigen:
Fig. 1 ein Flussdiagramm eines Verfahrens zum Ermitteln der Einspritzsignalkorrektur;
Fig. 2 ein Flussdiagramm eines Verfahrens zum Durchführen eines Korrektureingriffs in das Einspritzungssteuerungssignal
Fig. 3 eine Grafik, die den Verlauf der Variablen λshort, λlong und ethrate an einer Beispielsituation illustriert;
Fig. 4 eine schematische Darstellung einer Einspritzsteuerungsvorrichtung eines Kraftfahrzeugs mit einem nachgerüsteten Einspritzungssteuergerät;
Fig. 5 eine schematische Darstellung einer Einspritzsteuerungsvorrichtung mit einem nachgerüsteten Einspritzungssteuergerät in einer variierten Ausführungsform.

### Beschreibung einer/mehrerer Ausgestaltung(en) der Erfindung

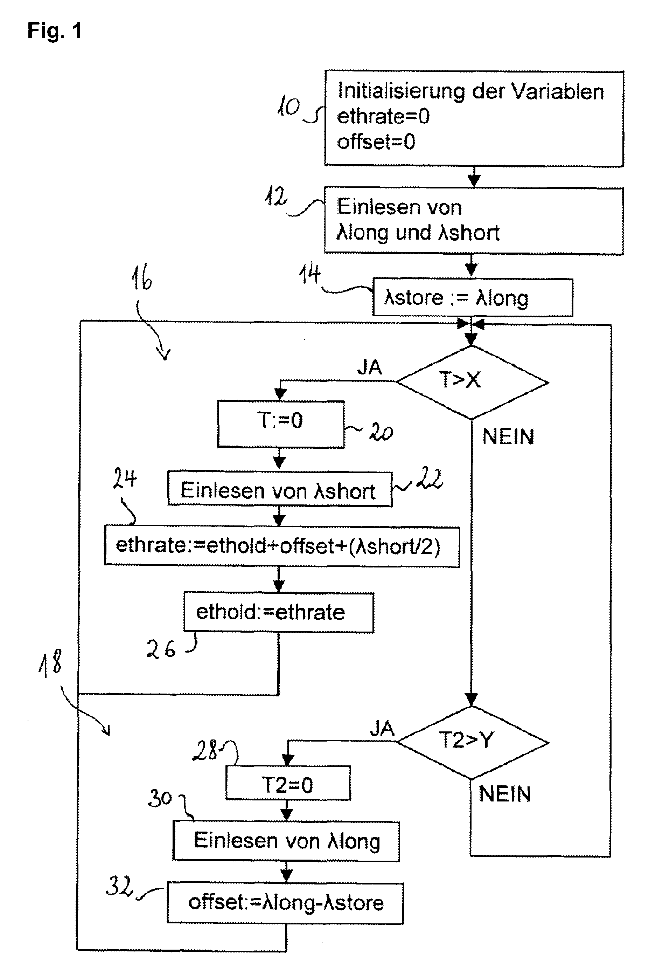

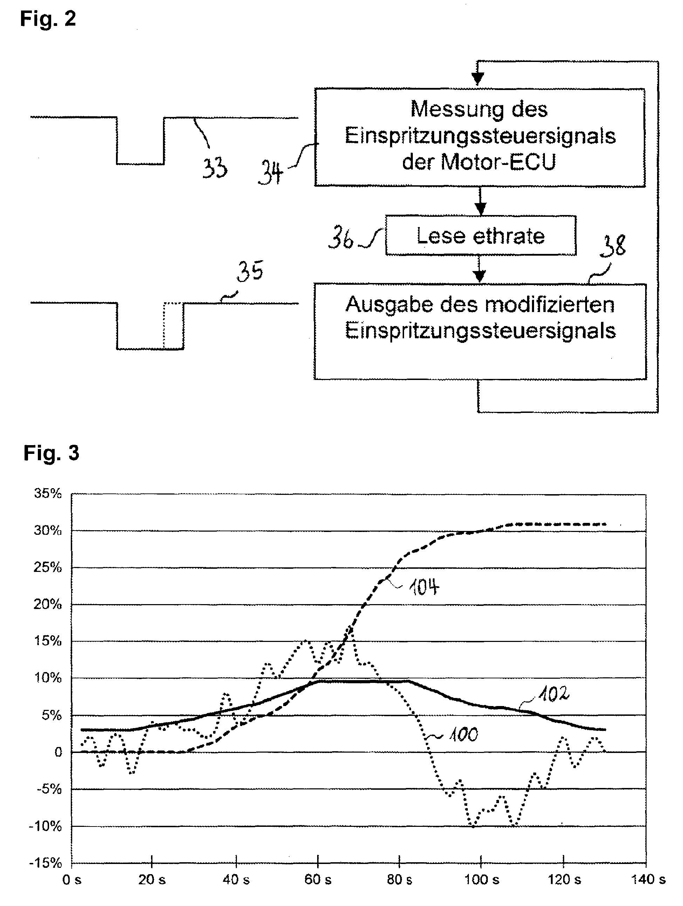

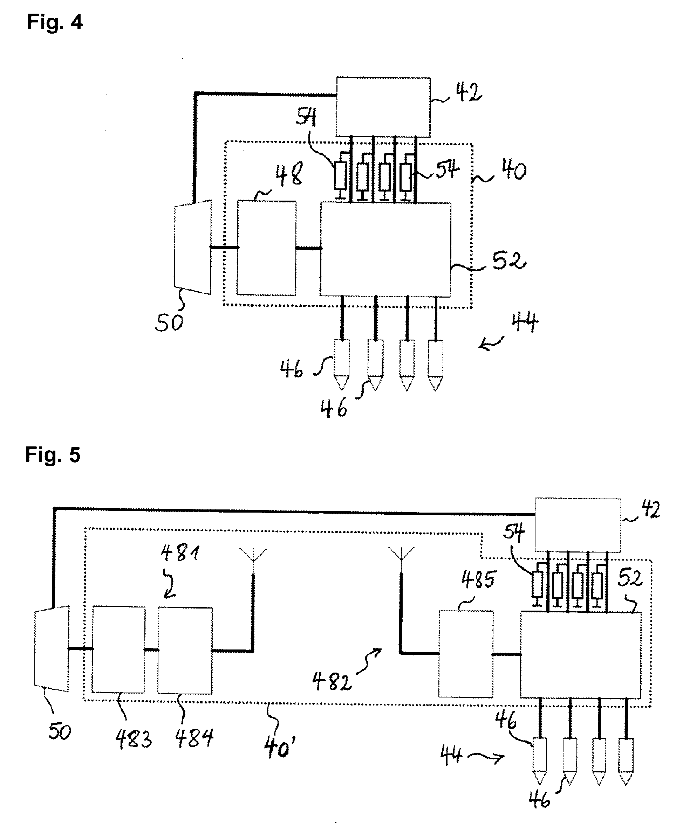

Die Figuren 1 und 2 zeigen Flussdiagramme zu einer bevorzugten Ausgestaltung des erfindungsgemäßen Verfahrens. Ein nachrüstbares Einspritzungssteuergerät wird dabei, wie in den Figuren 4 und 5 gezeigt, in Serie zwischen die Motorsteuerungseinheit und die Kraftstoffeinspritzvorrichtung des Motors geschaltet. Das Einspritzungssteuergerät wird außerdem an die Stromversorgung sowie mittels einer Kommunikationsschnittstelle an die On-Board-Diagnose des Fahrzeugs angeschlossen.

Während des Betriebs des Motors berechnet das Einspritzungssteuergerät eine Einspritzsignalkorrektur (Figur 1) und gibt ein aufgrund dieser Korrektur modifiziertes Einspritzungssteuersignal an die Einspritzungsvorrichtung weiter (Figur 2). Die aktuell berechnete Einspritzungssignalkorrektur wird in der Folge als "ethrate" (für Ethanolrate) bezeichnet.

In Fig. 1 werden folgende Bezeichnungen benutzt:
o λlong: Langzeit-Lambdaadaption;
o λshort: Kurzzeit-Lamdaadpation;
o λstore: gespeicherte Langzeit-Lambdaadaption = Sollwert für λlong,
o offset: Differenz zwischen λlong und λstore;
o ethrate: berechnete Einspritzungssignalkorrektur;
o ethold: abgespeicherte Einspritzungssignalkorrektur
o X: Wartezeit zwischen zwei Berechnungsschritten der Einspritzungssignalkorrektur (z.B. 2 Sekunden);
o Y: Wartezeit zwischen zwei Berechnungsschritten der offset-Variable (z.B. 20 Sekunden).

Beim Aufstarten wird zunächst das System zunächst initialisiert; insbesondere werden verschiedene Variablen auf einen vorbestimmten Ausgangswert gesetzt (Schritt 10). Im Fall des Beispiels der Figur 1 sind dies ethrate und offset, die beide auf den Wert 0 gesetzt werden. Außerdem werden die Werte der Langzeit- und Kurzzeit-Lambdaadaption in das Einspritzungssteuergerät eingelesen (Schritt 12). Zunächst wird auch der Wert von λstore auf den der ursprünglichen Langzeit-Lambdaadaption gesetzt (Schritt 14). λstore wird vorzugsweise nur beim ersten Aufstarten des Systems auf diesen Wert gesetzt. Bei erneutem Aufstarten wird der beim ersten Mal abgespeicherte Wert übernommen. So regelt das Einspritzungssteuergerät die Langzeit-Lambdaadaption in diesem Beispiel immer auf den selben Sollwert.

Die eigentlichen Korrekturen werden in zwei Schleifen 16, 18 berechnet, die in unterschiedlichen Zeitabständen durchlaufen werden. Zwei Stoppuhrfunktionen (mit Zeitvariablen T und T2) messen die Zeit, die seit dem letzten Durchlaufen der jeweiligen Schleife verstrichen ist. Die Stoppuhrfunktionen werden zum zunächst bei der Initialisierung des Systems gestartet.

Die Einspritzsignalkorrektur wird dabei in Abständen von etwa 2 s (X), die Langzeitkorrektur in Abständen von etwa 20 s (Y) ermittelt. Falls seit der letzen Berechnung von ethrate (d.h. seit dem letzten Aufrufen der Schleife 16) mehr als die Zeit X verstrichen ist, wird die erste Stoppuhrfunktion initialisiert (Schritt 20), der Wert von λshort aus der OBD eingelesen (Schritt 22) und ein neuer Wert der Kurzzeitkorrektur durch die Formel
ethrate:=ethold+offset+(λshort/2)
bestimmt (Schritt 24). (Mit ":=" wird, wie allgemein üblich, die Zuweisung des auf der rechten Seite stehenden Werts an die auf der linken Seite stehende Variable abgekürzt.) Der für ethrate berechnete Wert wird schließlich auch der Variable ethold zugewiesen (Schritt 26) und gespeichert. Dabei ist zu beachten, dass der gespeicherte Wert ethold nach einem erneuten Start des Systems zur Verfügung steht.

Die Offset-Korrektur wird in Zeitabständen von etwa 20 s neu berechnet. Falls seit der letzen Berechnung der Variable offset (d.h. seit dem letzten Aufrufen der Schleife 18) mehr als die Zeit Y verstrichen ist, wird die zweite Stoppuhrfunktion initialisiert (Schritt 28), der Wert von λlong aus der OBD eingelesen (Schritt 30) und ein neuer Wert der Offsetkorrektur durch die Formel
offset:=λlong-λstore
berechnet (Schritt 32).

Parallel zu der in Figur 1 gezeigten Prozedur wird der eigentliche Korrektureingriff in das Einspritzungssteuerungssignal vorgenommen. Wie in Figur 2 gezeigt, wird dafür das von der Motorsteuerungseinheit ausgegebene Einspritzungssteuersignal 33 abgegriffen (Schritt 34). Aufgrund des aktuellen (in Schritt 36 eingelesenen) Korrekturwerts ethrate wird dann ein modifiziertes Einspritzungssteuersignal 35 ausgegeben (Schritt 38). Häufig liegt das Einspritzungssteuersignal 33 als binäres Signal vor, welches einen ersten Wert (z.B. "0") annimmt, solange die Einspritzvorrichtung (Ventil, Düse, o. Ä.) geschlossen bleiben soll, und einen zweiten Wert (z.B. "-1") wenn die Einspritzvorrichtung (Ventil, Düse, o. Ä.) öffnen soll. In dem Fall ist es besonders einfach und vorteilhaft, das Ende des das Einspritzintervall vorgebenden Pulses wie in Figur 2 zeitlich nach vorne oder nach hinten zu verschieben.

Zu beachten ist, dass das Einspritzungssteuergerät lediglich eine relative Korrektur des Einspritzungssignals durchführt, die Motorsteuerungseinheit also auch weiterhin eine Regelung der Einspritzmenge durchführt und die Kurzzeit- und Langzeit-Lambdaadaptionswerte berechnet. Figur 3 zeigt das zeitliche Verhalten der Kurzzeit-Lambdaadaption (gepunktete Linie 100), der Langzeit-Lambdaadaption (durchgezogene Linie 102) und der Variable ethrate (gestrichelte Linie 104) für die Umstellungsphase vom Betrieb eines Ottomotors mit Benzin auf Betrieb mit E85.

Zum Zeitpunkt 0 wird das Fahrzeug mit E85 betankt. Zu diesem Zeitpunkt befinden sich noch Benzinreste in den Zuleitungen zum Motor. Etwa 20 s funktioniert der Motor noch im Benzinbetrieb. Der Langzeit-Lambdaadaptionswert liegt bis dahin konstant bei etwa 3%, die Kurzzeit-Lambdaadaption pendelt um den Nullpunkt.

Zwischen den Zeitpunkten 20 s und 100 s reichert sich das dem Motor zugeführte Gemisch progressiv mit Ethanol an. Man erkennt ein anhaltendes Abdriften der Kurzzeit-Lambdaadaption in Richtung "mager" d.h. in den Plusbereich. Die deutliche Tendenz der Kurzzeit-Lambdaadaption bewirkt, dass sich nun die Langzeit-Lambdaadaption auch zu ändern beginnt. Ohne das erfindungsgemäße Verfahren würde die Langzeit-Lambdaadaption nach kurzer Zeit die Grenze des erlaubten Bereichs erreichen und eine Fehlermeldung verursachen.

Der Verlauf von ethrate zeigt an, dass die durch das Einspritzungssteuergerät durchgeführte Korrektur zu greifen beginnt, sobald eine ausgeprägte Tendenz der Kurzzeit-Lambdaadaption erkennbar wird. Der Wert von ethrate steigt kontinuierlich an um sich nach etwa 100 s bei einem Wert von 31% zu stabilisieren. Die Kurzzeit-Lambdaadaption verschiebt sich nach etwa 60 s wieder gegen den Nullpunkt und sogar etwas in den negativen Bereich. Die bewirkt wiederum, dass sich die Tendenz der Langzeit-Lambdaadaption umkehrt. Nach etwa 120 s hat die Langzeit-Lambdaadaption ihren Ausgangswert von 3% wieder erreicht und die Kurzzeit-Lambdaadaption schwankt wieder um den Nullpunkt.

Man erkennt also, dass das in den Figuren 1 und 2 illustrierte Beispiel des erfindungsgemäßen Verfahrens den Langzeit-Lambdaadaptionswert auf den Wert von λ store als vorgegebenen Sollwert regelt.

Die Figur 4 zeigt ein erstes Beispiel eines Einspritzungssteuergerät 40 zum Durchführen des erfindungsgemäßen Verfahrens. Das Einspritzungssteuergerät 40 ist in Serie zwischen einer Motorsteuerungseinheit 42 und einer Einspritzungsvorrichtung 44 (umfassend beispielsweise mehrere Einspritzdüsen 46) geschaltet. Das Einspritzungssteuergerät umfasst eine Schnittstelle 48, über welche es an eine OBD-Einheit 50 der Motorsteuerungseinheit 42 angeschlossen ist, sowie eine Prozessoreinheit 52, beispielsweise ein Mikrokontroller, eine anwendungsspezifische integrierte Schaltung (ASIC), eine programmierbare integrierte Schaltung (etwa ein FPGA oder ein FPAA).

Die von der Motorsteuerungseinheit 42 ermittelten Motorparameter sind über die OBD-Einheit 50 verfügbar, und werden über die Schnittstelle 48 in das Einspritzungssteuergerät 40 eingelesen. Dabei umfassen die eingelesenen Parameter zumindest die Kurzzeit-Lambdaadaption und die Langzeit-Lambdaadaption.

Die Prozessoreinheit 52 ist mit Eingangsports zum Abgreifen der durch die Motorsteuerungseinheit ausgegebenen Einspritzungssteuersignale, sowie Ausgangsports zur Ausgabe von modifizierten Einspritzungssteuersignale an die Kraftstoffeinspritzvorrichtung ausgerüstet. Die Eingangsports sind mit die Einspritzdüsen 46 simulierenden elektrischen Ersatzlasten 54 beaufschlagt, welche vermeiden, dass die Motorsteuerungseinheit 42 fehlerhafte Abschlüsse ihrer Ausgänge diagnostiziert und eine entsprechende Fehlermeldung ausgibt. Aufgrund der Beschaltung mit den Ersatzlasten merkt die Motorsteuerungseinheit 42 nicht, dass die von ihr ausgegebenen Einspritzungssteuersignale die Einspritzungsvorrichtung nicht erreichen.

Figur 5 zeigt ein zweites Beispiel eines Einspritzungssteuergeräts 40'. Der Unterschied zum Einspritzungssteuergerät 40 aus Figur 4 liegt in der verwendeten Schnittstelle. Sämtliche anderen Komponenten sind wie in Figur 4 und werden deshalb nicht weiter besprochen.

Die Variante der Figur 5 trägt der Tatsache Rechnung, dass die OBD-Einheit in der meisten Fahrzeugen an einer vom Fahrzeuginnenraum zugänglichen Stelle angebracht ist, die auszulesenden Parameter jedoch in der Motorraum übertragen werden müssen. Um eine umständliche Verkabelung der OBD-Einheit mit dem nachgerüsteten Einspritzungssteuergerät zu vermeiden, wird an den CAN-Bus der OBD-Einheit 50 ein Funkübertragungsmodul 481 angeschlossen, welches drahtlos mit einem an die Prozessoreinheit angeschlossenen Funkempfangsmodul 482 kommuniziert. Dabei kann das Funkübertragungsmodul 481 direkt am Ort der CAN-Schnittstelle der OBD-Einheit 50 angebracht sein, während sich das Funkempfangsmodul 482 im Motorraum befindet. Im gezeigten Beispiel umfasst das Funkübertragungsmodul 481 eine Umwandlungsstufe 483 vom CAN-Protokoll ins RS-232-Format und eine Umwandlungsstufe 484 vom RS-232-Format ins Bluetooth-Format. Das Funkempfangsmodul 482 umfasst eine Umwandlungsstufe 485 vom Bluetooth- ins RS-232-Format. Natürlich können auch andere Übertragungsstandards zur Verwendung kommen.

## Patentansprüche

1. Verfahren zum Ansteuern einer Kraftstoffeinspritzvorrichtung (44) eines Verbrennungsmotors umfassend:
das Einlesen (12) in ein Einspritzungssteuergerät (40), über eine Schnittstelle (48), eines durch eine Motorsteuerungseinheit (42) ermittelten Parametersatzes enthaltend zumindest einen Kurzzeit-Lambdaadaptionswert und einen Langzeit-Lambdaadaptionswert;
das Abgreifen (34) eines ersten, durch die Motorsteuerungseinheit (42) ausgegebenen, Einspritzungssteuersignals (33) durch das Einspritzungssteuergerät (40);
das Ermitteln (24) einer Einspritzsignalkorrektur durch das Einspritzungssteuergerät (40) aufgrund zumindest des Kurzzeit-Lambdaadaptionswerts und des Langzeit-Lambdaadaptionswerts; sowie
die Ausgabe (38) eines zweiten, durch das Einspritzungssteuergerät (40) aufgrund des ersten Einspritzungssteuersignals (33) und der Einspritzsignalkorrektur erzeugten, Einspritzungssteuersignals (35) an die Kraftstoffeinspritzvorrichtung (44),
wobei durch die Ausgabe (38) des zweiten Einspritzungssteuersignals (35) an die Kraftstoffeinspritzvorrichtung (44) das Einspritzungssteuergerät (40) den Langzeit-Lambdaadaptionswert auf einen im Einspritzungssteuergerät (40) vorgegebenen Sollwert regelt.

2. Verfahren nach Anspruch 1, wobei das Ermitteln (24) der Einspritzsignalkorrektur die Berechnung eines Langzeitkorrekturwerts und eines Kurzzeitkorrekturwerts umfasst, welche beide zur Erzeugung des zweiten Einspritzungssteuersignals (35) herangezogen werden.

3. Verfahren nach Anspruch 2, wobei die berechneten Lang- und Kurzzeitkorrekturwerte durch das Einspritzungssteuergerät abgespeichtert werden (32, 26) und bei einer erneuten Berechnung der Lang- und Kurzzeitkorrekturwerte die abgespeichterten Lang- und Kurzzeitkorrekturwerte herangezogen werden.

4. Verfahren nach einem der Ansprüche 1 bis 3, wobei die Einspritzsignalkorrektur im zweiten Einspritzungssteuersignal (35) bezogen auf das erste Einspritzungssteuersignal (33) eine Veränderung einer Kraftstoffeinspritzdauer bewirkt.

5. Verfahren nach einem der Ansprüche 1 bis 4, wobei die Einspritzsignalkorrektur im zweiten Einspritzungssteuersignal (35) bezogen auf das erste Einspritzungssteuersignal (33) eine zeitliche Verschiebung eines Beginns und/oder eines Endes einer Kraftstoffeinspritzung bewirkt.

6. Verfahren nach einem der Ansprüche 1 bis 5, wobei das erste Einspritzungssteuersignal (33) von der Motorsteuerungseinheit (42) während eines Betriebs des Einspritzungssteuergerät (40) ständig an eine die Einspritzvorrichtung simulierende elektrische Ersatzlast (54) ausgegeben wird, und wobei das Abgreifen (34) des ersten Einspritzungssteuersignals (33) durch das Einspritzungssteuergerät an dieser Ersatzlast (54) erfolgt.

7. Verfahren nach einem der Ansprüche 1 bis 6, wobei in das Einspritzungssteuergerät (40) eingelesene Parametersatz weiter einen oder mehrere der folgenden Parameter umfasst:
- Kalkulierte Motorlast,
- Erkannte Luftmasse,
- Drosselklappenposition,
- Saugrohrdruck,
- Fahrpedalposition,
- Motortemperatur,
- Ansauglufttemperatur,
- Drehzahl,
und wobei der im Einspritzungssteuergerät (40) vorgegebene Sollwert und/oder die Einspritzsignalkorrektur in Abhängigkeit eines oder mehrerer der Parameter des eingelesenen Parametersatzes bestimmt wird.

8. Verfahren nach einem der Ansprüche 1 bis 7, wobei das Einspritzungssteuergerät (40) aus dem ersten Einspritzungssteuersignal eine Drehzahl des Verbrennungsmotors ermittelt.

9. Verfahren nach Anspruch 8, wobei der im Einspritzungssteuergerät (40) vorgegebene Sollwert und/oder die Einspritzsignalkorrektur in Abhängigkeit der ermittelten Drehzahl bestimmt wird.

10. Verfahren nach Anspruch 8 oder 9, wobei die ermittelte Drehzahl durch das Einspritzungssteuergerät (40) hinzugezogen wird, um über die Einspritzsignalkorrektur eine zeitliche Verschiebung eines Beginns und/oder eines Endes einer Kraftstoffeinspritzung zu bewirken.

11. Einspritzungssteuergerät (40) zum Ansteuern einer Kraftstoffeinspritzvorrichtung (44) eines Verbrennungsmotors, umfassend:
eine Schnittstelle (48) zum Einlesen in das Einspritzungssteuergerät (40) eines durch eine Motorsteuerungseinheit (42) ermittelten Parametersatzes enthaltend zumindest einen Kurzzeit-Lambdaadaptionswert und einen Langzeit-Lambdaadaptionswert; und
eine Prozessoreinheit (52) mit einem Eingangsport zum Abgreifen eines ersten, durch die Motorsteuerungseinheit (42) ausgegebenen, Einspritzungssteuersignals sowie einem Ausgangsport zur Ausgabe eines zweiten Einspritzungssteuersignals an die Kraftstoffeinspritzvorrichtung (44);
wobei die Prozessoreinheit (52) so konfiguriert ist, dass sie aufgrund zumindest des Kurzzeit-Lambdaadaptionswerts und des Langzeit-Lambdaadaptionswerts eine Einspritzsignalkorrektur ermittelt sowie aufgrund des ersten Einspritzungssteuersignals und der ermittelten Einspritzsignalkorrektur das zweite Einspritzungssteuersignal erzeugt, mittels dessen Ausgabe an die Kraftstoffeinspritzvorrichtung (44) der Langzeit-Lambdaadaptionswert auf einen im Einspritzungssteuergerät (40) vorliegenden Sollwert geregelt wird.

12. Einspritzungssteuergerät (40') nach Anspruch 11, wobei die Schnittstelle (481) sowie die Prozessoreinheit (52) dazu eingerichtet sind, drahtlos miteinander zu kommunizieren.

13. Einspritzungssteuergerät (40) nach Anspruch 11 oder 12, umfassend zumindest eine die Einspritzvorrichtung simulierende elektrische Ersatzlast (54), welche an einen das erste Einspritzungssteuersignal ausgebenden Ausgangsport der Motorsteuerungseinheit (42) anschließbar ist.

14. Computerprogrammprodukt, umfassend mittels eines Speicher- und/oder Transportmediums als Computercode dargestellte Instruktionen, welche darauf ausgerichtet sind, eine Prozessoreinheit (52) eines Einspritzungssteuergerät (40) nach einem der Ansprüche 11 bis 13, die diese Instruktionen befolgt, dazu zu veranlassen, aufgrund zumindest des Kurzzeit-Lambdaadaptionswerts und des Langzeit-Lambdaadaptionswerts eine Einspritzsignalkorrektur zu ermitteln sowie aufgrund des ersten Einspritzungssteuersignals und der ermittelten Einspritzsignalkorrektur das zweite Einspritzungssteuersignal zu erzeugen, mittels dessen Ausgabe an die Kraftstoffeinspritzvorrichtung der Langzeit-Lambdaadaptionswert auf einen im Einspritzungssteuergerät (40) vorliegenden Sollwert geregelt wird.

## Claims

1. A method for actuating a fuel injection device (44) of an internal combustion engine comprising:
reading (12) a set of parameters ascertained by an engine control unit (42) into an injection control device (40), via an interface (48), said set of parameters at least containing a short-term lambda adaptation value and a long-term lambda adaptation value;
tapping (34), by the injection control device (40), a first injection control signal (33) output by the engine control unit (42);
ascertaining (24) an injection signal correction by the injection control device (40) on the basis at least of the short-term lambda adaptation value and of the long-term lambda adaptation value; and
outputting (38) to the fuel injection device (44) a second injection control signal (35) generated by the injection control device (40) on the basis of the first injection control signal (33) and the injection signal correction, wherein, by outputting (38) the second injection control signal (35) to the fuel injection device (44), the injection control device (40) adjusts the long-term lambda adaptation value to a setpoint predetermined in the injection control device (40).

2. A method according to claim 1, wherein ascertaining (24) the injection signal correction includes calculation of a long-term correction value and of a short-term correction value, both of which are used to generate the second injection control signal (35).

3. A method according to claim 2, wherein the calculated long- and short-term correction values are saved (32, 26) by the injection control device and used to recalculate the long- and short-term correction values of the saved long- and short-term correction values.

4. A method according to any one of claims 1 to 3, wherein the injection signal correction in the second injection control signal (35) relative to the first injection control signal (33) brings about a change in fuel injection duration.

5. A method according to any one of claims 1 to 4, wherein the injection signal correction in the second injection control signal (35) relative to the first injection control signal (33) brings about a time shift in the start and/or end of fuel injection.

6. A method according to any one of claims 1 to 5, wherein the first injection control signal (33) is constantly output by the engine control unit (42) during operation of the injection control device (40) to an electric replacement load (54) simulating the injection device, and wherein tapping (34) of the first injection control signal (33) by the injection control device proceeds at this replacement load (54).

7. A method according to any one of claims 1 to 6, wherein the set of parameters read into the injection control device (40) comprises one or more of the following parameters:
- calculated engine load,
- detected air mass,
- throttle valve position,
- intake manifold pressure,
- accelerator pedal position,
- engine temperature,
- intake air temperature,
- engine speed
and wherein the setpoint predetermined in the injection control device (40) and/or the injection signal correction is determined as a function of one or more of the parameters of the read in set of parameters.

8. A method according to any one of claims 1 to 7, wherein the injection control device (40) ascertains an engine speed of the internal combustion engine from the first injection control signal.

9. A method according to claim 8, wherein the setpoint predetermined in the injection control device (40) and/or the injection signal correction is determined as a function of the ascertained engine speed.

10. A method according to claim 8 or claim 9, wherein the ascertained engine speed is used by the injection control device (40) to bring about a time shift of the start and/or end of fuel injection via the injection signal correction.

11. An injection control device (40) for actuating a fuel injection device (44) of an internal combustion engine comprising:
an interface (48) for reading a set of parameters ascertained by an engine control unit (42) into an injection control device (40), said set of parameters at least containing a short-term lambda adaptation value and a long-term lambda adaptation value; and
a processor unit (52) with an input port for tapping a first injection control signal output by the engine control unit (42) and an output port for outputting a second injection control signal to the fuel injection device (44);
wherein the processor unit (52) is configured in such a way that it ascertains an injection signal correction on the basis of at least the short-term lambda adaptation value and the long-term lambda adaptation value and generates the second injection control signal on the basis of the first injection control signal and the ascertained injection signal correction, outputting of which second injection control signal to the fuel injection device (44) adjusts the long-term lambda adaptation value to a setpoint present in the injection control device (40).

12. An injection control device (40') according to claim 11, wherein the interface (481) and the processor unit (52) are designed to communicate wirelessly with one another.

13. An injection control device (40) according to claim 11 or claim 12, comprising at least one electric replacement load (54) simulating the injection device, which load can be connected to an output port of the engine control unit (42) outputting the first injection control signal.

14. A computer program product, comprising instructions represented as computer code by means of a memory means and/or transport medium, which instructions are designed to cause a processor unit (52) of an injection control device (40) according to any one of claims 11 to 13, which follows these instructions, to ascertain an injection signal correction on the basis of at least the short-term lambda adaptation value and the long-term lambda adaptation value and to generate the second injection control signal on the basis of the first injection control signal and the ascertained injection signal correction, outputting of which second injection control signal to the fuel injection device adjusts the long-term lambda adaptation value to a setpoint present in the injection control device (40).

## Revendications

1. Procédé de commande d'un dispositif d'injection de carburant (44) d'un moteur à combustion interne comprenant :
la saisie (12) dans un appareil de commande d'injection (40), via une interface (48), d'un jeu de paramètres déterminé par le biais d'une unité de commande de moteur (42) contenant au moins une valeur d'adaptation lambda de courte durée et une valeur d'adaptation lambda de longue durée ;
l'acquisition (34) d'un premier signal de commande d'injection (33), émis par le biais de l'unité de commande de moteur (42), par le biais de l'appareil de commande d'injection (40) ;
la détermination (24) d'une correction de signal d'injection par le biais de l'appareil de commande d'injection (40) sur la base d'au moins la valeur d'adaptation lambda de courte durée et la valeur d'adaptation lambda de longue durée ; ainsi que
l'émission (38) d'un deuxième signal de commande d'injection (35), généré par le biais de l'appareil de commande d'injection (40) sur la base du premier signal de commande d'injection (33) et de la correction de signal d'injection, vers le dispositif d'injection de carburant (44),
dans lequel l'émission (38) du deuxième signal de commande d'injection (35) vers le dispositif d'injection de carburant (44) permet à l'appareil de commande d'injection (40) de régler la valeur d'adaptation lambda de longue durée à une valeur théorique prédéterminée dans l'appareil de commande d'injection (40).

2. Procédé selon la revendication 1, dans lequel la détermination (24) de la correction de signal d'injection comprend le calcul d'une valeur de correction de longue durée et d'une valeur de correction de courte durée, lesquelles sont toutes deux utilisées pour la génération du deuxième signal de commande d'injection (35).

3. Procédé selon la revendication 2, dans lequel les valeurs de correction de longue et courte durée calculées sont mises en mémoire (32, 26) par le biais de l'appareil de commande d'injection et les valeurs de correction de longue et courte durée mises en mémoire sont utilisées pour renouveler le calcul des valeurs de correction de longue et courte durée.

4. Procédé selon l'une des revendications 1 à 3, dans lequel la correction de signal d'injection dans le deuxième signal de commande d'injection (35) produit une modification de la durée d'injection de carburant par rapport au premier signal de commande d'injection (33).

5. Procédé selon l'une des revendications 1 à 4, dans lequel la correction de signal d'injection dans le deuxième signal de commande d'injection (35) produit un décalage temporel d'un début et/ou d'une fin d'une injection de carburant par rapport au premier signal de commande d'injection (33).

6. Procédé selon l'une des revendications 1 à 5, dans lequel le premier signal de commande d'injection (33) est émis en continu vers une charge de référence électrique (54) simulant le dispositif d'injection par l'unité de commande de moteur (42) pendant un fonctionnement de l'appareil de commande d'injection (40), et dans lequel l'acquisition (34) du premier signal de commande d'injection (33) est effectuée par le biais de l'appareil de commande d'injection au niveau de cette charge de référence (54).

7. Procédé selon l'une des revendications 1 à 6, dans lequel le jeu de paramètres saisi dans l'appareil de commande d'injection (40) comprend en outre un ou plusieurs des paramètres suivants :
- charge du moteur calculée,
- masse d'air reconnue,
- position du papillon des gaz,
- position de la pression du collecteur d'admission,
- pédale de l'accélérateur,
- température du moteur,
- température de l'air d'aspiration,
- régime,
et dans lequel la valeur théorique prédéfinie dans l'appareil de commande d'injection (40) et/ou la correction de signal d'injection sont déterminées en fonction d'un ou plusieurs des paramètres du jeu de paramètres saisi.

8. Procédé selon l'une des revendications 1 à 7, dans lequel l'appareil de commande d'injection (40) détermine un régime du moteur à combustion interne à partir du premier signal de commande d'injection.

9. Procédé selon la revendication 8, dans lequel la valeur théorique prédéfinie dans l'appareil de commande d'injection (40) et/ou la correction de signal d'injection sont fixées en fonction du régime du moteur déterminé.

10. Procédé selon la revendication 8 ou 9, dans lequel le régime du moteur déterminé est utilisé par le biais de l'appareil de commande d'injection (40) afin de produire un décalage temporel d'un début et/ou d'une fin d'une injection de carburant via la correction de signal d'injection.

11. Appareil de commande d'injection (40) pour la commande d'un dispositif d'injection de carburant (44) d'un moteur à combustion interne, comprenant :
une interface (48) pour saisir dans l'appareil de commande d'injection (40) un jeu de paramètres déterminé par le biais d'une unité de commande de moteur (42) contenant au moins une valeur d'adaptation lambda de courte durée et une valeur d'adaptation lambda de longue durée ; et
une unité de traitement (52) avec un port d'entrée pour l'acquisition d'un premier signal de commande d'injection, émis par le biais de l'unité de commande de moteur (42), ainsi qu'un port de sortie pour l'émission d'un deuxième signal de commande d'injection vers le dispositif d'injection de carburant (44) ;
dans lequel l'unité de traitement (52) est configurée de telle sorte qu'elle détermine sur la base d'au moins la valeur d'adaptation lambda de courte durée et la valeur d'adaptation lambda de longue durée une correction de signal d'injection et génère sur la base du premier signal d'injection et de la correction de signal d'injection le deuxième signal d'injection, dont l'émission vers le dispositif d'injection de carburant (44) permet de régler la valeur d'adaptation lambda de longue durée à une valeur théorique présente dans l'appareil de commande d'injection (40).

12. Appareil de commande d'injection (40') selon la revendication 11, dans lequel l'interface (481) ainsi que l'unité de traitement (52) sont agencées de manière à communiquer entre elles sans fil.

13. Appareil de commande d'injection (40) selon la revendication 11 ou 12, comprenant au moins une charge de référence électrique (54) simulant le dispositif d'injection, laquelle charge peut être raccordée à un port de sortie de l'unité de commande de moteur (42) qui émet le premier signal d'injection.

14. Produit de programme informatique, comprenant des instructions affichées au moyen d'un support de mise en mémoire et/ou de transport en tant que code informatique, lesquelles instructions sont conçues pour amener une unité de traitement (52) d'un appareil de commande d'injection (40) selon l'une des revendications 11 1 à 13 qui suit ces instructions à déterminer une correction de signal de correction sur la base d'au moins la valeur d'adaptation lambda de courte durée et la valeur d'adaptation lambda de longue durée ainsi qu'à générer le deuxième signal de commande d'injection sur la base du premier signal de commande d'injection et de la correction de signal d'injection déterminée, deuxième signal dont l'émission vers le dispositif d'injection de carburant permet de régler la valeur d'adaptation lambda de longue durée à une valeur théorique présente dans l'appareil de commande d'injection (40).
